(19) Europäisches Patentamt
European Patent Office
Office européen des brevets

(11) **EP 1 405 427 B1**

(12) **EUROPEAN PATENT SPECIFICATION**

(45) Date of publication and mention
of the grant of the patent:
**26.12.2018 Bulletin 2018/52**

(51) Int Cl.:
***H04B 1/69*** *(2011.01)*          ***H04B 1/707*** *(2011.01)*
***H04L 27/26*** *(2006.01)*

(21) Application number: **02744685.5**

(22) Date of filing: **28.06.2002**

(86) International application number:
**PCT/US2002/020422**

(87) International publication number:
**WO 2003/005594 (16.01.2003 Gazette 2003/03)**

(54) **SYSTEM AND METHOD FOR POST FILTERING PEAK POWER REDUCTION IN COMMUNICATIONS SYSTEMS**

SYSTEM UND VERFAHREN ZUR NACHFILTERUNG BEI DER SPITZENLEISTUNGSREDUKTION IN KOMMUNIKATIONSSYSTEMEN

SYSTEME ET PROCEDE DE POST-FILTRAGE DE SIGNAUX A REDUCTION DE PUISSANCE DE CRETE DANS DES SYSTEMES DE COMMUNICATION

(84) Designated Contracting States:
**AT BE CH CY DE DK ES FI FR GB GR IE IT LI LU MC NL PT SE TR**

(30) Priority: **02.07.2001 US 302565 P**
**20.03.2002 US 102493**

(43) Date of publication of application:
**07.04.2004 Bulletin 2004/15**

(73) Proprietor: **Intel Corporation**
**Santa Clara, CA 95054 (US)**

(72) Inventor: **HUNTON, Matthew**
**Liberty Lake, WA 99019 (US)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A- 1 091 516     US-A- 5 991 262**
**US-B1- 6 175 551     US-B1- 6 175 551**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to communications systems that transmit signals that may be composed of one or more combined transmit carriers. Each of these carriers may include one or more communication channels. More particularly, the present invention relates to wireless communications systems and signal processing apparatus employed in wireless communications systems. The term 'wireless communications systems' includes cellular communication systems, personal communication systems (PCS), wireless local loop systems, and all other like systems.

2. Background of the Prior Art and Related Information

Wireless communications systems employing transmission between base stations and remote users are a key component of the modern communications infrastructure. These wireless systems are being placed under increasing performance demands that are taxing the capability of available equipment, especially wireless base station equipment. These increasing performance demands are due to both the increasing numbers of users within a given wireless region, as well as the bandwidth requirements allocated to wireless system service providers. The increasing number of wireless users is of course readily apparent and this trend is unlikely to slow due to the convenience of wireless services. The second consideration is largely due to the increased types of functionality provided by wireless systems, such as wireless Internet access and other forms of wireless data transfer over such systems. These considerations have resulted in a need for more communication channels per carrier and more carriers operating from each transmitting location of a wireless service network.

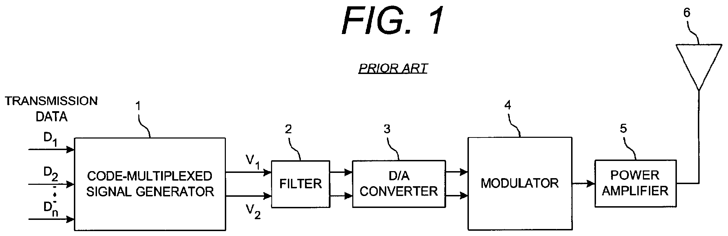

One method of transmitting multiple communication channels on a single carrier is to use a code multiplexed signal generator as shown in Figure 1. Data channels from different users enter the code multiplexed signal generator 1 to produce a complex signal output represented by in-phase and quadrature-phase components $V_1$ and $V_2$ respectively. This complex signal output is then band limited by filtering 2, converted to a baseband analog signal by Digital-to-Analog (D/A) conversion 3, modulated to an RF frequency 4, amplified 5 and transmitted by an antenna 6. This method is used by wireless systems providing CDMA (Code Division Multiple Access) or WCDMA (Wideband Code Division Multiple Access) services.

Other methods exist for combining several communication channels onto a single carrier. For example the code multiplexed signal generator 1 in Figure 1 could be replaced with a time multiplexed signal generator. As before multiple input data signals would be combined to produce a complex signal output represented by in-phase and quadrature-phase components $V_1$ and $V_2$ respectively. NADC (North American Digital Cellular) and GSM (Global System for Mobile Communications) wireless service providers use time multiplexed signal generators.

For single carrier generation, the signal generator 1 of Figure 1 and the filter 2 create signal peaks which determine the peak-to-average ratio of the signal which must be D/A converted 3, modulated 4, and amplified 5. High peak-to-average ratios require increased cost in these components. D/A converters with large bit counts must be used to both create the large peaks and maintain adequate signal resolution to overcome noise generated in the D/A conversion process. High peak-to-average ratios require the use of very linear RF up converting modulator and power amplifier components to prevent signal distortion from increasing carrier bandwidth through distortion and intermodulation. Signal bandwidth is government regulated. Increased carrier bandwidth may cause operation outside government allocated operating bands in violation of the law.

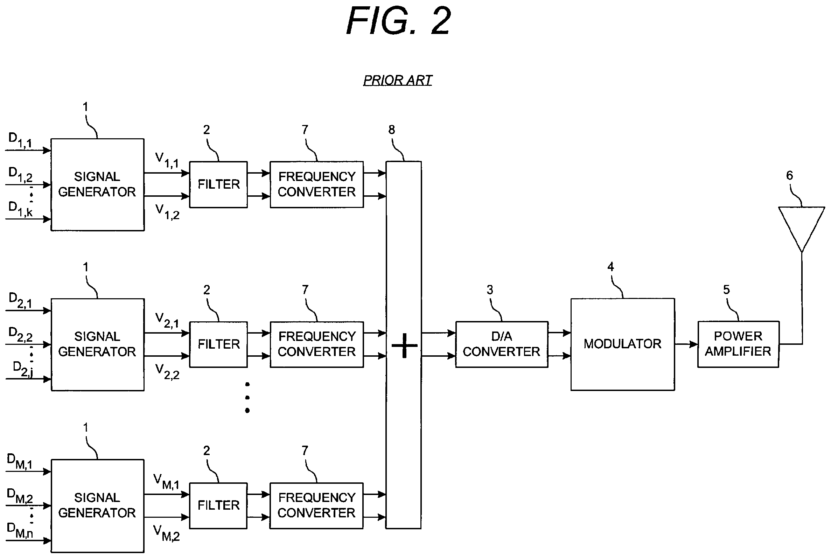

Figure 2 shows a prior art multiple carrier communication system. Figure 2 shows signal generation of M complex signals $V_{m,1}$ and $V_{m,2}$. Each complex signal would then be filtered 2, offset in frequency 7, and combined 8 to generate a single complex signal. This combined complex signal would then be processed in a manner identical to the single carrier signal after filtering 2 in Figure 1.

When generating a multiple carrier signal as shown in Figure 2, the output signal peak-to-average ratio is determined by the signal generators 1, the filters 2, and the interaction of each carrier in combining 8. This multiple carrier signal must then be D/A converted 3, modulated 4, and amplified 5. As with the single carrier, high peak-to-average ratios increase the cost of the D/A converter 3, RF up converting modulator 4, and amplifier 5 components.

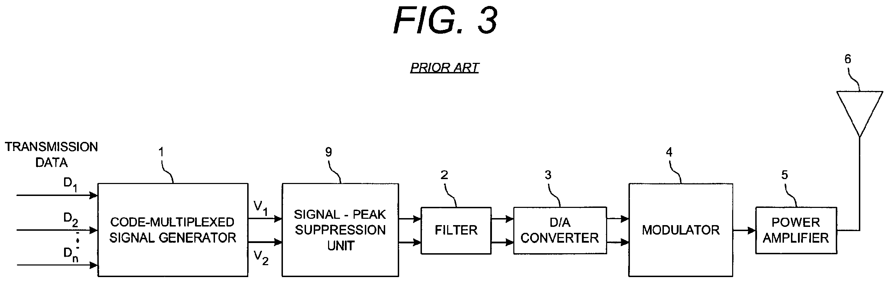

In a previous approach, placing a signal-peak suppression block prior to filtering 2 has been employed in an attempt to reduce the peak-to-average ratio in single carrier communication systems. This prior art approach is shown in Figure 3. The signal-peak suppression block 9 operates by adjusting the input complex signal prior to filtering. By making signal adjustments prior to filtering, the resultant adjustments do not affect signal bandwidth guaranteeing operation within government allocated limits. The subsequent filtering introduces new peaks, however, and the effectiveness of the prior signal-peak suppression block is greatly reduced.

As mentioned previously, the peak power of a multiple carrier communication system, as shown in Figure 2, is dependent on the signal generators 1, filters 2, and interaction of each carrier in combining 8. The approach shown in Figure 3 if inserted prior to filtering 2 in Figure 2 would be incapable of correcting for the interaction of each carrier in combining. This limitation would eliminate most, if not all, benefits of such an application of prior art.

In single carrier communication systems it is often difficult to place a peak reduction block before filtering 2 and obtain effective peak reduction. Applying previous art in a multiple carrier communication system would prove ineffective.

A solution to the problem of peak reduction in a multi-carrier CDMA system is known for instance from document EP-A-1091516.

Therefore, a problem exists in prior approaches to reducing high signal peaks in communications systems.

SUMMARY

In a first aspect the present invention provides a communication system comprising a communication signal source providing a band limited communication signal; for example, the communication system may be a multi-carrier communication system or a spread spectrum communication system. A peak reduction unit is coupled to receive the band limited communication signal and provide a band limited peak reduced output signal. The peak reduction unit comprises a circuit for providing a peak reduction correction waveform corresponding to the difference between the communication signal and the communication signal hard limited to a limit value and a correction filter for filtering the peak reduction correction waveform and providing a band limited peak reduction correction signal corresponding to the band limits of the communication signal. A combiner receives the band limited communication signal and the band limited peak reduction correction signal and combines them to provide a band limited peak reduced output signal. The peak reduction unit also preferably comprises a delay for delaying the band limited communication signal and providing the delayed signal to the combiner. The communication system may further comprise a digital-to-analog conversion stage for converting the peak reduced output signal to an analog signal, a power amplifier receiving and amplifying the analog signal, and an antenna coupled to the output of the power amplifier.

In a further aspect, the present invention provides a peak reduction unit adapted for use in a communication system. The peak reduction unit comprises a first signal path and a second parallel signal path. The first signal path receives a band limited input signal and includes a delay circuit for delaying the input signal.

The second parallel signal path also receives the band limited input signal and includes a peak reduction calculation unit for calculating a peak reduction correction and a filter providing a filtering operation on the peak reduction correction. The peak reduction unit further comprises a combiner combining the filtered peak reduction correction and delayed input signal and providing peak adjusted output signals.

In a preferred embodiment of the peak reduction unit, the second signal path further comprises a signal magnitude detector, a comparator for comparing the signal magnitude to a predetermined limit value and a switch coupled to the output of the comparator and the peak reduction calculation unit for selecting the peak reduction correction if the signal magnitude exceeds the predetermined limit value. The second signal path may also include a gain circuit for adjusting the magnitude of the correction by a gain value. The gain circuit may comprise a multiplier receiving the peak reduction correction signal and multiplying it by the gain value. The gain value should be less than 1 when the peak impulse response of the correction filter is normalized to 1. In a more general case the gain value should be greater than zero but less than a level that would cause the peak to average ratio to begin increasing. The input signal may comprise digital samples represented by complex vectors and the peak reduction calculation unit may comprise an algorithm processor which performs a complex vector calculation on the input samples to determine a complex correction vector which when added to the input sample results in a signal magnitude at or within a predetermined limit value. The combiner preferably comprises an addition circuit. The filter provides a filtering operation limiting the correction signal to a frequency band corresponding to the spectral band of the band limited input signal and may comprise a finite impulse response filter.

In a further aspect, the present invention provides a method for signal peak reduction in a communication system where the communication signal is processed to limit the signal bandwidth to a predetermined spectral band. The method comprises receiving as an input a band limited communication signal and determining a peak reduction correction signal based on the amount the band limited communication signal exceeds a threshold peak power value. The method further comprises filtering the peak correction signal to limit the bandwidth of the peak correction signal and combining the filtered peak correction signal and input filtered communication signal to provide a peak reduced output communication signal. Preferably the input communication signal is delayed prior to combining with the filtered peak correction signal.

Preferably the method for signal peak reduction further comprises adjusting the peak correction signal by a gain value before the combining. Also, the determining, gain adjusting, filtering and combining may be repeated employing a different gain value. The determining preferably comprises performing a peak reduction algorithm on the input communication signal. The method for signal peak reduction may further comprise detecting the magnitude of the input communication signal and comparing the magnitude to a peak limit value and selectively outputting the peak reduction correction signal to be filtered and combined only when the magnitude of the input communication signal exceeds the magnitude of the peak limit value. Preferably the filtering operation limits the peak reduction correction signal to a frequency band corresponding to the spectral band of the communication signal.

The method for signal peak reduction may be employed in a multi-carrier communication system wherein the communication signal is a multi-carrier signal provided by combining a plurality of separate carrier signal sources, each having a stream of carrier symbols corresponding to one or more data channels. Alternatively, the method for signal peak reduction may be employed in a spread spectrum communication system wherein the communication signal is a spread spectrum signal provided by combining a plurality of separate streams of communication symbols corresponding to a plurality of data channels.

Accordingly, it will be appreciated that the present invention provides a system and method for signal peak reduction, adapted for use in a communication system incorporating a source of a band limited communication signal, which provides signal peak reduction of the communication signal without violating the band limits of the communication signal or the modulation scheme of the communication signal. Further features and aspects of the present invention will be appreciated by reviewing the following detailed description of the invention.

BRIEF DESCRIPTION OF THE DRAWINGS

Figure 1 is a block schematic drawing of a prior art single carrier communications system.

Figure 2 is a block schematic drawing of a prior art multiple carrier communications system.

Figure 3 is a block schematic drawing of a prior art single carrier communications system with peak reduction performed prior to filtering.

Figure 4 is a block schematic drawing of the present invention showing signal-peak suppression just prior to D/A conversion in a single carrier communication system.

Figure 5 is a block schematic drawing of the present invention showing signal-peak suppression just prior to D/A conversion in a multiple carrier communication system.

Figure 6 is a detailed block schematic drawing of the signal-peak suppression unit shown in Figure 4 and Figure 5.

Figure 7 shows a complex signal vector diagram detailing the calculation of the correction signal used to suppress the output signal peak power.

Figure 8 shows the impulse response function of the correction filter used to limit the bandwidth of the correction signal calculated in Figure 7.

Figure 9 shows the effect filtering has on an example correction signal and illustrates the advantages of gain weighting the correction signal.

Figure 10 shows a graphical approach to determining the gain weighting constant used.

DETAILED DESCRIPTION OF THE INVENTION

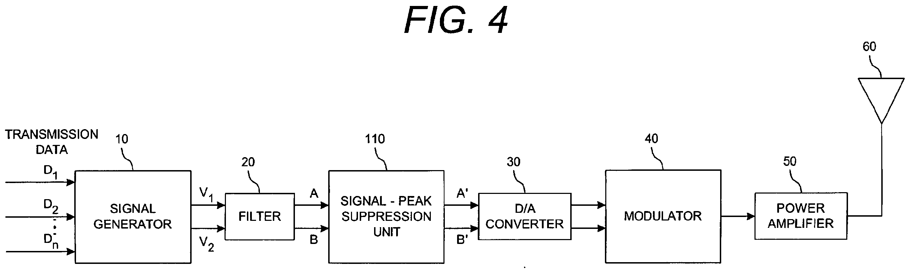

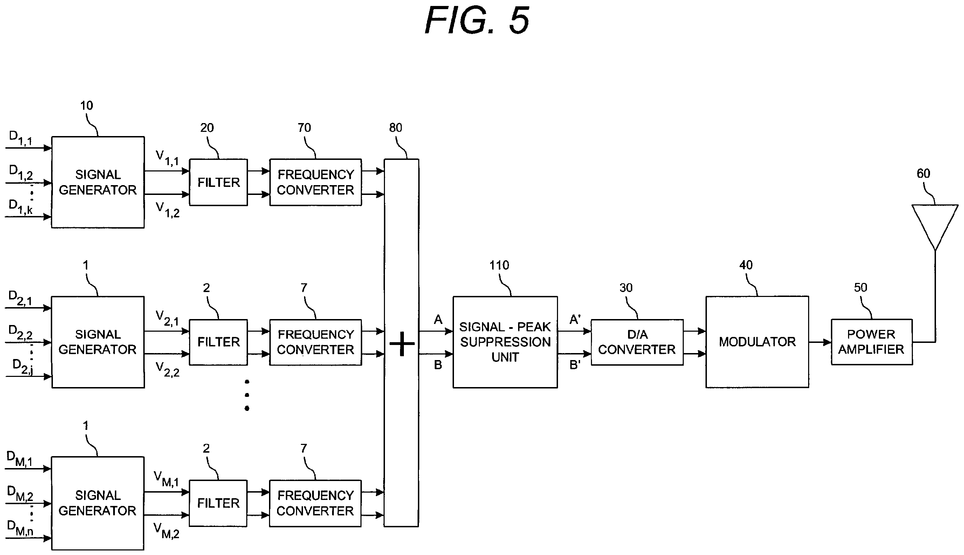

A preferred embodiment of a single carrier communications system employing signal-peak suppression (or reduction) in accordance with the present invention is illustrated in Figure 4. A preferred embodiment of a multiple carrier communications system employing signal-peak suppression in accordance with the present invention is illustrated in Figure 5.

Referring to Figure 4, a communication signal, which may comprise a digitally sampled signal stream represented by an in-phase component signal stream A and a quadrature-phase component signal stream B, is input to a signal-peak suppression unit 110. This digitally sampled signal stream may contain one or more communications channels as produced by the signal generator 10 and filter 20. The signal-peak suppression unit outputs a peak-reduced signal stream represented by an in-phase component signal stream A' and a quadrature component signal stream B'. This signal-peak suppression output signal is then D/A converted at D/A converter 30, modulated onto a RF carrier at RF up converting modulator 40, amplified by power amplifier 50, and transmitted with an antenna 60.

Referring to Figure 5, a preferred embodiment of a multiple carrier communications system employing signal-peak suppression in accordance with the present invention is illustrated. A communication signal, which may comprise a digitally sampled signal stream represented by an in-phase component signal stream A and a quadrature-phase component signal stream B, is input to a signal-peak suppression unit 110. This digitally sampled signal stream may represent one or more transmit carriers with each of these transmit carriers providing one or more communication channels as produced by the signal generators 10, filters 20, frequency converters 70 and combiner 80. The signal-peak suppression unit outputs a peak-reduced signal stream represented by an in-phase component signal stream A' and a quadrature component signal stream B'. This peak-reduced signal is then D/A converted at D/A converter 30, modulated onto a RF carrier at RF up converting modulator 40, amplified by power amplifier 50, and transmitted with an antenna 60.

In both the embodiment of Figure 4 and Figure 5, the communication signal which is input to the peak suppression unit 110 is band limited to a band corresponding to the spectral band allocated to the communication system, typically by a government body such as the FCC (Federal Communication Commission). This band limiting is typically provided by filters 20. These filters may be viewed as modulation filters since in addition to limiting the signal band to the allocated spectral mask the trajectory of the signal waveform is modified in a manner that must be consistent with the modulation scheme. As will be discussed in detail below the signal peak suppression unit 110 peak suppresses the communication signal without violating the spectral band or the modulation scheme.

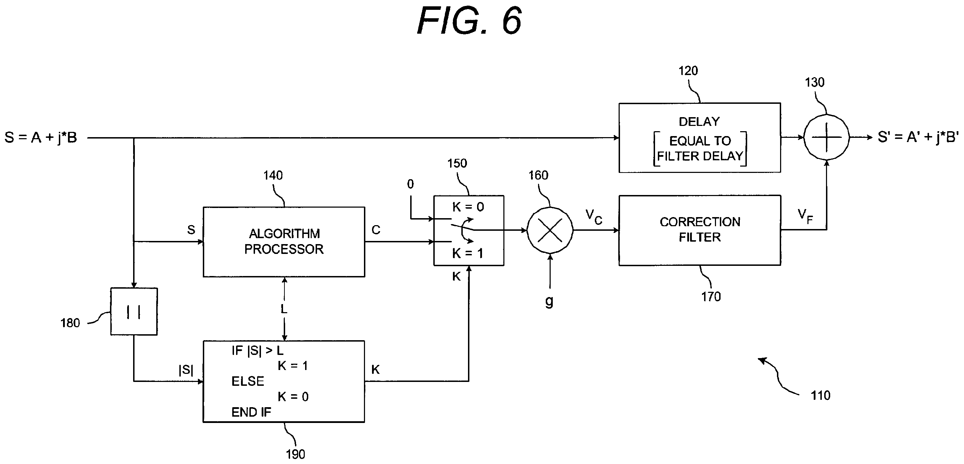

Referring to Figure 6, a detailed embodiment of the signal-peak suppression unit 110 of Figure 4 and Figure 5 is illustrated. The signal-peak suppression unit processes the in-phase and quadrature-phase component streams A and B as a single complex signal stream S. The signal-peak suppression unit includes a first signal path with a delay 120 and a parallel correction signal path. An algorithm processor 140 in the correction signal path calculates a correction vector C based on each sample of S and a signal limiting constant L. The magnitude of each sample of S is determined at 180 and input to a switch driver 190, which controls switch 150. Switch 150 selects either the calculated correction vector C or the value zero depending on whether the magnitude of the current sample of S exceeds the limiting constant L. The output of switch 150 represents the difference between the input signal stream S and a version of S hard limited to the amplitude L. The output of the switch is then adjusted by a gain constant g at multiplier 160 to create the correction signal stream $V_C$. The correction signal stream $V_C$ is then filtered with a correction filter 170 to create the filtered correction signal stream $V_F$. The filtered correction signal stream $V_F$ is then combined at combiner 130 with a time-delayed version of the input complex signal stream S. The combined signal stream is the peak-adjusted output signal stream S' that can be represented as in-phase component A' and quadrature component B' signal streams.

It is important to notice that the output signal stream S' is created from a delayed version of the input signal stream S and the filtered correction signal stream $V_F$. The filtered correction signal $V_F$ acts as interference to the transmission of data to the intended communication channel users. The gain g adjusts the level of interference. If the gain g were set to zero the signal stream S would be transmitted without interference. Notice that the only change to the input signal stream S is the addition of $V_F$. The input signal stream S is not changed by either time varying gain control or filtering. Both filtering and time varying gain control of the signal stream S would cause signal changes. Such changes would act to affect the modulation of the input signal stream S. In the present invention the modulation of the input signal stream S is unaffected by the addition of the filtered correction signal stream $V_F$.

The correction signal stream $V_C$ comprises a waveform and thus has an associated bandwidth. The correction filter 170 is employed to limit the bandwidth of the correction waveform of the correction signal stream $V_C$. The bandwidth and frequency dependent gain of the correction filter should be set to meet the government allocated bandwidth requirements of the desired communication signal. In the single transmit carrier case, the correction filter can be set to match the filter characteristics of the filter 20 shown in Figure 4. In the multiple carrier case, the correction filter bandwidth should be set to cover all transmitted carriers. The correction filter will time delay the correction signal stream $V_C$ requiring a matching time delay, provided by time delay circuit 120, to signal stream S prior to signal combination with $V_F$. Time delay circuit 120 should also include any additional delays associated with the correction signal path, e.g., such as due to algorithm processor 140. This signal combination produces S' in Figure 6.

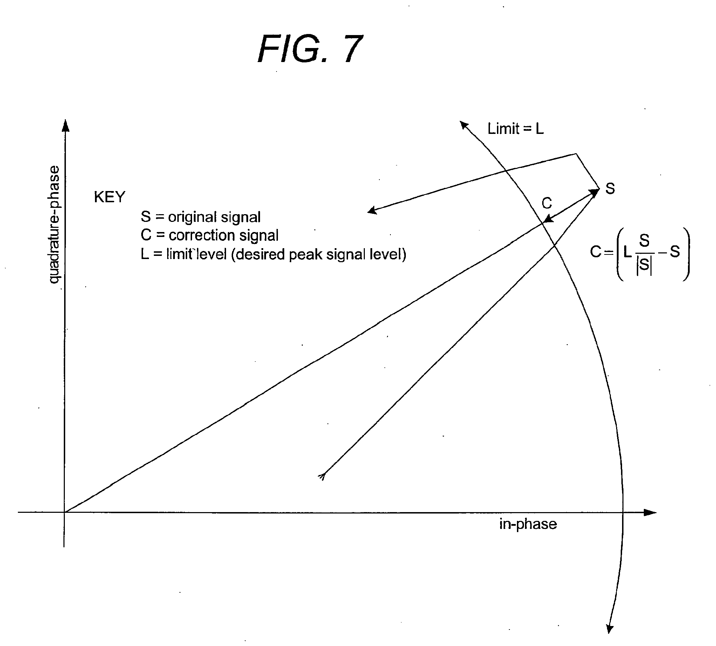

The algorithm processor 140 uses Equation (1) below to calculate the correction vector C for each sample of S. This equation was developed geometrically from Figure 7. Figure 7 shows a time trajectory segment of the complex input signal stream S and a vector representing a single sample of S. At the time instant of the sample shown, the complex input signal S exceeds the limiting constant L by the complex vector C. The complex vector C is calculated using Equation (1).

$$C = \left( L\frac{S}{|S|} - S \right) \tag{1}$$

Referring to Figure 6, the correction vector C only contributes to correction signal stream $V_C$ when the magnitude of a complex input signal sample of S exceeds the limiting constant L. If the output from the switch 150 were added directly to the input complex signal stream S, the output peak power would be clamped to the limiting constant L. Unfortunately, the bandwidth of the switch output would exceed the government allocated bandwidth required for the output signal. To limit the switch output bandwidth, the correction signal stream $V_C$ is passed through the correction filter.

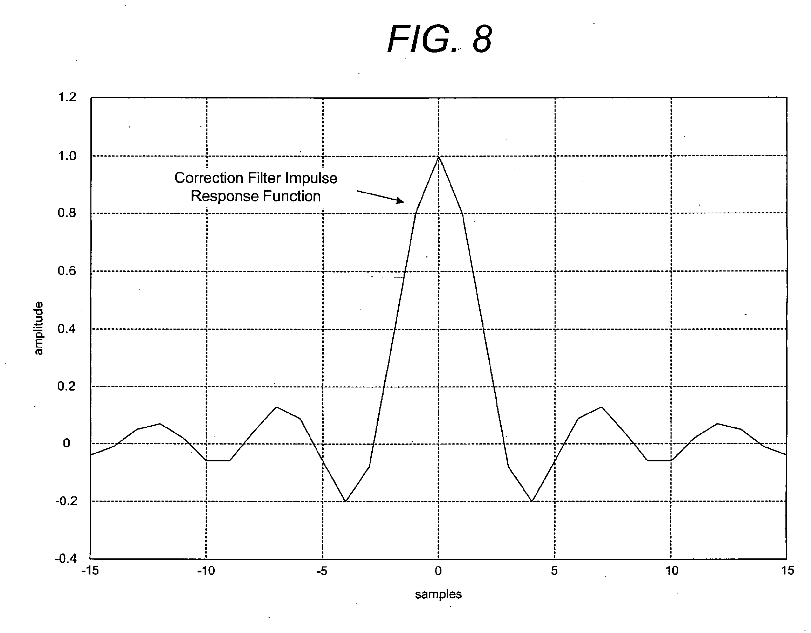

Each input sample to the correction filter will produce an input sample gain adjusted reproduction of the correction filter impulse response function at the filter output. These reproductions are combined to produce the correction filter output. Figure 8 shows a typical impulse response function that may be produced by a correction filter. This impulse response function is shown for example purposes only. The impulse response function used in an actual functioning system will be determined by system needs. It is instructive to examine the correction filter output based on a few simple example $V_C$ signal streams.

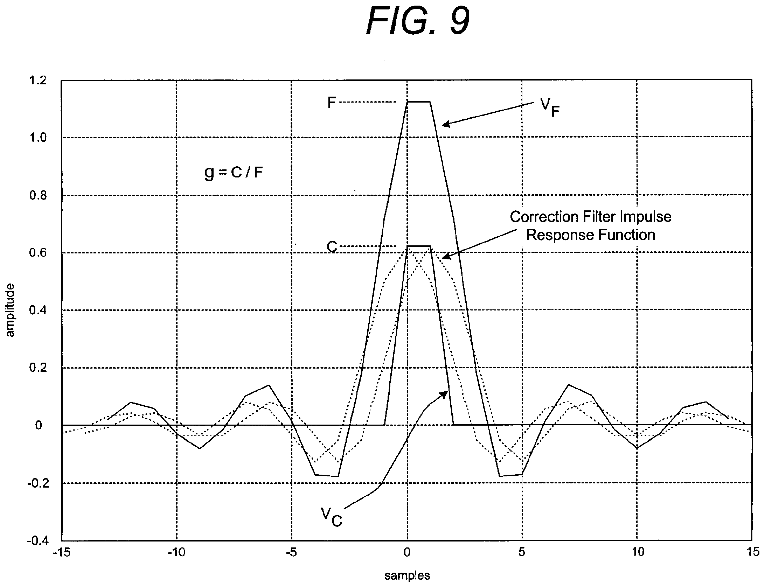

Consider a short duration peak signal stream S that produces a correction signal $V_C$ composed of two equal amplitude correction samples in time sequence. These two correction samples would be preceded and followed by zero valued samples based on the switch 150 selection. The correction filter input and output signals $V_C$ and $V_F$ for this example are both shown in Figure 9. The two non-zero input samples of $V_C$ are just over 0.6 in amplitude. The figure shows how the impulse response function of the correction filter acts on $V_C$ to create $V_F$. The filtered correction signal amplitude F corresponds to the input signal correction amplitude C in Figure 9. To prevent over compensation, a gain adjustment g must be applied in the correction signal generation path prior to combining with signal S in Figure 6. For the example shown, Figure 9 calculates this gain g by simply taking the ratio of C over F.

The gain calculation in the last paragraph was specific to the example $V_C$ sample stream described. If the correction filter input signal stream were just one correction sample proceeded and followed by zero valued samples, the filter input and output amplitudes would have been the same at the required correction instant. In this second example, the gain g calculated would have been one.

The two examples used to evaluate the gain constant g provided different gains for different correction signal input examples. Any real correction signal $V_C$ will produce an infinite number of similar type examples. The gain constant g used must provide the best possible peak signal suppression for all possible variations in $V_C$. Typical variations in $V_C$ can be determined by performing a trial using a representative fixed time length complex input signal S, and a fixed limiting constant L. With a typical $V_C$ signal produced, a series of test trials can be performed with different gain g constants. From these trials curves of S' peak-to-average ratio versus gain g and $V_F$ signal power versus gain g can be plotted to determine the best performance producing gain g value.

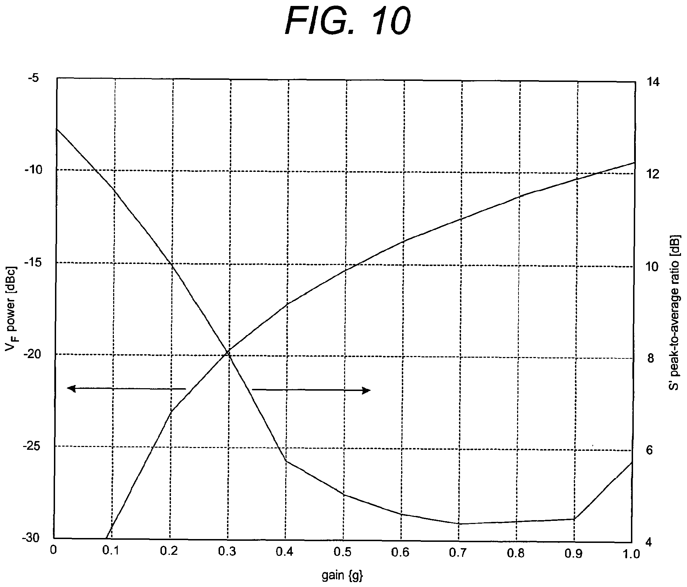

Figure 10 shows an example set of these curves for a specific test case. The exact particulars of the test case are not important. The curves are shown as an example on how to select the best performing gain g constant. One curve in Figure 10 shows the power of $V_F$ measured relative to the power in S just prior to combining with S. The other curve shows the peak-to-average ratio of the output signal S'. $V_F$ signal power represents distortion in the output complex signal S'. $V_F$ signal power should be kept to a minimum to avoid degrading overall system communication quality. Figure 10 shows that lower gains produce lower $V_F$ signal power but also lower reduction in S' peak-to-average ratio. The S' peak-to-average ratio curve shows a knee in the peak-to-average reduction at g equal to 0.4. Increasing gain g much beyond 0.4 could increase the output signal distortion caused by $V_F$ without significant additional suppression of peak power.

The gain g selection demonstrated above was shown for demonstration purposes only. In an actual system the gain g would depend on the specific input signal S, the limiting constant L, and the correction filter design used. The gain value should be less than 1 when the peak impulse response of the correction filter is normalized to 1. In a more general case the gain value should be greater than zero but less than a level that would cause the peak to average ratio to begin increasing.

Finally, further signal-peak suppression can be achieved by cascading in series multiple signal-peak suppression units 110 shown in Figure 4 and Figure 5. By cascading signal-peak suppression stages less signal distortion will be present in the eventual output signal than if a larger gain value were selected in a single stage process. The method shown in Figure 10 should be used to determine the gain g constant for each stage. Since the input to each successive stage is already peak reduced, the gain g constant should be optimized to a different value for each stage. When performing test trials on successive stages the input signal used should be the peak-reduced signal from the preceding stage where the gain g has been previously optimized. If the limiting constant L is the same for each successive stage, the output signal peak will closely approach the limiting constant L within two or three successive stages.

The present invention thus provides a communications system employing a signal-peak suppression unit that is inserted just prior to D/A conversion. By doing so, the complexity and cost of the D/A converters, RF up converting modulator, and power amplifier will be reduced. Further features and advantages of the present invention will be appreciated by those skilled in the art.

A number of different embodiments of the present invention have been described in relation to the various figures. Nonetheless, it will be appreciated by those skilled in the art that a variety of additional embodiments are possible within the teachings of the present invention. For example, a variety of specific circuits implementing specific algorithms may be provided employing the teachings of the present invention and limitations of space prevent an exhaustive list of all the possible circuit implementations or an enumeration of all possible algorithms. A variety of other possible modifications and additional embodiments are also clearly possible and fall within the scope of the present invention. Accordingly, the described specific embodiments and implementations should not be viewed as in any sense limiting in nature and are merely illustrative of the present invention.

**Claims**

1.  A communication system, comprising:

    a communication signal source (10) providing a band limited communication signal wherein said signal source (10) comprises a modulation filter (20) for limiting the bandwidth of the communication signal; and
    a peak reduction unit (110) coupled to receive said band limited communication signal and provide a band limited peak reduced output signal, the peak reduction unit (110) comprising a circuit for providing a peak reduction correction waveform corresponding to the difference between the communication signal and the communication signal hard limited to a limit value as determined at each sample, a correction filter (170) for filtering the peak reduction correction waveform and providing a band limited peak reduction correction signal corresponding to the band limits of the communication signal, wherein said correction filter (170) is set to match the filter characteristics of said modulation filter (20), and a combiner (80) for combining said band limited communication signal and said band limited peak reduction correction signal to provide a band limited peak reduced output signal;
    wherein said peak reduction unit (110) further comprises:

    a first signal path receiving as input signal said band limited communication signal and including a delay circuit (120) for delaying the input signal;
    a second parallel signal path receiving said band limited input signal and including a peak reduction calculation unit (140) for calculating a peak reduction correction and said correction filter (170) providing a filtering operation on the peak reduction correction;
    wherein the combiner (80) is adapted to combine the filtered peak reduction correction and delayed input signal and providing peak adjusted output signals, wherein said second signal path further comprises a gain circuit (160) for adjusting the magnitude of the correction by a gain value (g) that depends on the band limited communication signal, the limit value and the correction filter design.

2.  A communication system as set out in claim 1, wherein said communication system is a multi-carrier communication system.

3.  A communication system as set out in claim 1, wherein said communication system is a spread spectrum communication system.

4.  A communication system as set out in claim 1, wherein said peak reduction unit (110) further comprises a delay (120) for delaying the band limited communication signal and providing the delayed signal to said combiner (80).

5.  A communication system as set out in claim 1, wherein said combiner (80) is a complex addition circuit.

6.  A communication system as set out in claim 1, further comprising a digital-to-analog conversion stage (30) for converting said peak reduced output signal to an analog signal.

7.  A communication system as set out in claim 6, further comprising a power amplifier (50) receiving and amplifying said analog signal.

8.  A communication system as set out in claim 7, further comprising an antenna (60) coupled to the output of the power amplifier (50).

9.  A communication system as set out in claim 1, wherein said second signal path further comprises a signal magnitude detector (180), a comparator (190) for comparing the signal magnitude to a predetermined limit value and a switch (150) coupled to the output of the comparator (190) and the peak reduction calculation unit (140) for selecting said peak reduction correction if the signal magnitude exceeds the predetermined limit value.

10. A communication system as set out in claim 1, wherein said gain value (g) is less than 1 when the peak impulse response of the correction filter (170) is normalized to 1.

11. A communication system as set out in claim 1, wherein said gain value (g) is greater than zero but less than a level that would cause the peak to average ratio to begin increasing.

12. A communication system as set out in claim 1, wherein said gain circuit (160) comprises a multiplier receiving said peak reduction correction signal and multiplying it by said gain value (g).

13. A communication system as set out in claim 1,
wherein the input signal comprises digital samples represented by complex vectors and wherein the peak reduction calculation unit (140) comprises an algorithm processor which performs a complex vector calculation on the input samples to determine a complex correction vector which when added to the input sample results in a signal magnitude at or within a predetermined limit value.

14. A communication system as set out in claim 13, wherein the combiner (80) comprises an addition circuit.

15. A method for signal peak reduction in a communication system where the communication signal is processed to limit the signal bandwidth to a predetermined spectral band, comprising:

 receiving as an input a band limited communication signal;
 determining a peak reduction correction signal based on the amount the band limited communication signal exceeds a threshold peak power value, as determined at each sample;
 filtering the peak correction signal to limit the bandwidth of the peak correction signal;
 adjusting the peak correction signal by a gain value (g); and
 combining the filtered peak correction signal and input filtered communication signal to provide a peak reduced output communication signal;
 wherein the communication system comprises a peak reduction unit comprising a first signal path and a second parallel signal path and the method further comprises:

  receiving said band limited input signal by the first signal path;
  delaying the input signal;
  receiving said band limited input signal by the second parallel signal path;
  calculating a peak reduction correction by the peak reduction unit;
  providing a filtering operation on the peak reduction correction;
  adjusting the magnitude of the correction by a gain value (g) that depends on the band limited communication signal, the limit value and the correction filter design; and
  combining the filtered peak reduction correction and delayed input signal and providing peak adjusted output signals.

16. A method for signal peak reduction in a communication system as set out in claim 15, further comprising repeating said determining, gain adjusting, filtering and combining employing a different gain value (g).

17. A method for signal peak reduction in a communication system as set out in claim 15, wherein said determining comprises performing a peak reduction algorithm on said input communication signal.

18. A method for signal peak reduction in a communication system as set out in claim 17, further comprising detecting the magnitude of the input communication signal and comparing the magnitude to a peak limit value.

19. A method for signal peak reduction in a communication system as set out in claim 18, further comprising selectively outputting the peak reduction correction signal to be filtered and combined only when the magnitude of the input communication signal exceeds the magnitude of the peak limit value.

20. A method for signal peak reduction in a communication system as set out in claim 15, wherein said communication signal is a multi-carrier signal provided by combining a plurality of separate carrier signal sources (10), each having a stream of carrier symbols corresponding to one or more data channels.

**21.** A method for signal peak reduction in a communication system as set out in claim 15, wherein said communication signal is a spread spectrum signal provided by combining a plurality of separate streams of communication symbols corresponding to a plurality of data channels.

**22.** A method for signal peak reduction in a communication system as set out in claim 15, wherein said gain value (g) is greater than zero but less than a level that would cause the peak to average ratio to begin increasing.

**Patentansprüche**

**1.** Kommunikationssystem, das Folgendes umfasst:

eine Kommunikationssignalquelle (10), die ein bandbegrenztes Kommunikationssignal liefert, wobei die Signalquelle (10) ein Modulationsfilter (20) zum Begrenzen der Bandbreite des Kommunikationssignals umfasst; und

eine Spitzenwertverringerungseinheit (110), die angeschlossen ist, um das bandbegrenzte Kommunikationssignal zu empfangen und ein bandbegrenztes spitzenwertverringertes Ausgangssignal zu liefern, wobei die Spitzenwertverringerungseinheit (110) eine Schaltung, um eine Spitzenwertverringerungswellenform zu liefern, die dem Unterschied zwischen dem Kommunikationssignal und dem auf einen Grenzwert fest begrenzten Kommunikationssignal wie an jeder Probe bestimmt entspricht, ein Korrekturfilter (170) zum Filtern der Spitzenwertverringerungskorrekturwellenform und Liefern eines bandbegrenzten spitzenwertverringerten Korrektursignals, das den Bandgrenzen des Kommunikationssignals entspricht, wobei das Korrekturfilter (170) so eingestellt ist, dass es mit den Filtereigenschaften des Modulationsfilters (20) übereinstimmt, und eine Vereinigungseinrichtung (80) zum Vereinigen des bandbegrenzten Kommunikationssignals und des bandbegrenzten Spitzenwertverringerungskorrektursignals, um ein bandbegrenztes spitzenwertverringertes Ausgangssignal zu liefern, umfasst;

wobei die Spitzenwertverringerungseinheit (110) ferner Folgendes umfasst:

einen ersten Signalweg, der als Eingangssignal das bandbegrenzte Kommunikationssignal empfängt und eine Verzögerungsschaltung (120) enthält, um das Eingangssignal zu verzögern;

einen zweiten parallelen Signalweg, der das bandbegrenzte Eingangssignal empfängt und eine Spitzenwertverringerungsberechnungseinheit (140) enthält, um eine Spitzenwertverringerungskorrektur zu berechnen, und das Korrekturfilter (170), das einen Filtervorgang an der Spitzenwertverringerungskorrektur liefert;

wobei die Vereinigungseinrichtung (80) ausgelegt ist, die gefilterte Spitzenwertverringerungskorrektur und das verzögerte Eingangssignal zu vereinigen, und spitzenwertangepasste Ausgangssignale liefert, wobei der zweite Signalweg ferner eine Verstärkungsschaltung (160) umfasst, um die Größe der Korrektur durch einen Verstärkungswert (g) anzupassen, der von dem bandbegrenzten Kommunikationssignal, dem Grenzwert und dem Korrekturfilterdesign abhängt.

**2.** Kommunikationssystem nach Anspruch 1, wobei das Kommunikationssystem ein Mehrträgerkommunikationssystem ist.

**3.** Kommunikationssystem nach Anspruch 1, wobei das Kommunikationssystem ein Spreizspektrumkommunikationssystem ist.

**4.** Kommunikationssystem nach Anspruch 1, wobei die Spitzenwertverringerungseinheit (110) ferner eine Verzögerung (120) umfasst, um das bandbegrenzte Kommunikationssignal zu verzögern und das verzögerte Signal an die Vereinigungseinrichtung (80) zu liefern.

**5.** Kommunikationssystem nach Anspruch 1, wobei die Vereinigungseinrichtung (80) eine komplexe Additionsschaltung ist.

**6.** Kommunikationssystem nach Anspruch 1, das ferner eine Digital/Analog-Umsetzungsstufe (30) umfasst, um das spitzenwertverringerte Ausgangssignal in ein Analogsignal umzusetzen.

**7.** Kommunikationssystem nach Anspruch 6, das ferner einen Leistungsverstärker (50) umfasst, der das Analogsignal empfängt und verstärkt.

8. Kommunikationssystem nach Anspruch 7, das ferner eine Antenne (60) umfasst, die an den Ausgang des Leistungsverstärkers (50) gekoppelt ist.

9. Kommunikationssystem nach Anspruch 1, wobei der zweite Signalweg ferner einen Signalgrößendetektor (180), eine Vergleichseinrichtung (190) zum Vergleichen der Signalgröße mit einem vorbestimmten Grenzwert und einen Schalter (150), der an den Ausgang der Vergleichseinrichtung (190) und der Spitzenwertverringerungsberechnungseinheit (140) gekoppelt ist, zum Auswählen der Spitzenwertverringerungskorrektur, wenn die Signalgröße den vorbestimmten Grenzwert überschreitet, umfasst.

10. Kommunikationssystem nach Anspruch 1, wobei der Verstärkungswert (g) kleiner als 1 ist, wenn die Spitzenwertimpulsantwort des Korrekturfilters (170) auf 1 normalisiert ist.

11. Kommunikationssystem nach Anspruch 1, wobei der Verstärkungswert (g) größer als Null, aber kleiner als ein Pegel ist, der bewirken würde, dass das Spitzenwert-zu-Mittelwert-Verhältnis beginnt, zu steigen.

12. Kommunikationssystem nach Anspruch 1, wobei die Verstärkungsschaltung (160) einen Vervielfacher umfasst, der das Spitzenwertverringerungskorrektursignal empfängt und es mit dem Verstärkungswert (g) multipliziert.

13. Kommunikationssystem nach Anspruch 1, wobei das Eingangssignal digitale Proben umfasst, die durch komplexe Vektoren repräsentiert werden, und wobei die Spitzenwertverringerungsberechnungseinheit (140) einen Algorithmusprozessor umfasst, der eine komplexe Vektorberechnung an den Eingangsproben ausführt, um einen komplexen Korrekturvektor zu bestimmen, der dann, wenn er zu den Eingangsproben hinzugefügt wird, eine Signalgröße bei einem vorbestimmten Grenzwert oder innerhalb dessen ergibt.

14. Kommunikationssystem nach Anspruch 13, wobei die Vereinigungseinrichtung (80) eine Additionsschaltung umfasst.

15. Verfahren für eine Signalspitzenwertverringerung in einem Kommunikationssignal, in dem das Kommunikationssystem verarbeitet wird, um die Signalbandbreite auf ein vorbestimmtes spektrales Band zu begrenzen, das Folgendes umfasst:

Empfangen eines bandbegrenzten Kommunikationssignals als eine Eingabe;
Bestimmen eines Spitzenwertverringerungskorrektursignals anhand des Betrags, um den das bandbegrenzte Kommunikationssignal einen Schwellenwertspitzenwertleistungswert wie an jeder Probe bestimmt überschreitet;
Filtern des Spitzenwertkorrektursignals, um die Bandbreite des Spitzenwertkorrektursignals zu begrenzen;
Anpassen des Spitzenwertkorrektursignals durch einen Verstärkungswert (g); und
Vereinigen des gefilterten Spitzenwertkorrektursignals und des eingegebenen gefilterten Kommunikationssignals, um ein spitzenwertverringertes Ausgangskommunikationssignal zu liefern;
wobei das Kommunikationssystem eine Spitzenwertverringerungseinheit umfasst, die einen ersten Signalweg und einen zweiten parallelen Signalweg umfasst, und das Verfahren ferner Folgendes umfasst:

Empfangen des bandbegrenzten Eingangssignals durch den ersten Signalweg;
Verzögern des Eingangssignals;
Empfangen des bandbegrenzten Eingangssignals durch den zweiten parallelen Signalweg;
Berechnen einer Spitzenwertverringerungskorrektur durch die Spitzenwertverringerungseinheit;
Liefern eines Filtervorgangs an der Spitzenwertverringerungskorrektur;
Anpassen der Größe der Korrektur durch einen Verstärkungswert (g) der von dem bandbegrenzten Kommunikationssignal, dem Grenzwert und dem Korrekturfilterdesign abhängt;
und Vereinigen der gefilterten Spitzenwertverringerungskorrektur und des verzögerten Eingangssignals und Liefern von spitzenwertangepassten Ausgangssignalen.

16. Verfahren für die Signalspitzenwertverringerung in einem Kommunikationssystem nach Anspruch 15, das ferner umfasst, das Bestimmen, Verstärkungsanpassen, Filtern und Vereinigen unter Einsatz eines anderen Verstärkungswerts (g) zu wiederholen.

17. Verfahren für eine Signalspitzenwertverringerung in einem Kommunikationssystem nach Anspruch 15, wobei das Bestimmen umfasst, einen Spitzenwertverringerungsalgorithmus an dem Eingangskommunikationssignal auszuführen.

18. Verfahren für eine Signalspitzenwertverringerung in einem Kommunikationssystem nach Anspruch 17, das ferner umfasst, die Größe des Eingangskommunikationssignals zu detektieren und die Größe mit einem Spitzenwertgrenzwert zu vergleichen.

19. Verfahren für eine Signalspitzenwertverringerung in einem Kommunikationssystem nach Anspruch 18, das ferner umfasst, wahlweise das zu filternde und zu vereinigende Spitzenwertverringerungskorrektursignal nur dann auszugeben, wenn die Größe des Eingangskommunikationssignals die Größe des Spitzenwertgrenzwerts überschreitet.

20. Verfahren für eine Signalspitzenwertverringerung in einem Kommunikationssystem nach Anspruch 15, wobei das Kommunikationssignal ein Mehrträgersignal ist, das durch Vereinigen mehrerer getrennter Trägersignalquellen (10), die jeweils einen Strom von Trägersymbolen besitzen, die einem oder mehreren Datenkanälen entsprechen, geliefert wird.

21. Verfahren für eine Signalspitzenwertverringerung in einem Kommunikationssystem nach Anspruch 15, wobei das Kommunikationssignal ein Spreizspektrumsignal ist, das durch Vereinigen mehrerer getrennter Ströme von Kommunikationssymbolen, die mehreren Datenkanälen entsprechen, geliefert wird.

22. Verfahren für eine Signalspitzenwertverringerung in einem Kommunikationssystem nach Anspruch 15, wobei der Verstärkungswert (g) größer als null aber kleiner als ein Pegel ist, der bewirken würde, dass das Spitzenwert-zu-Mittelwert-Verhältnis beginnt, zu steigen.

**Revendications**

1. Système de communications, comprenant :

   une source de signal de communication (10) produisant un signal de communication à largeur de bande limitée, ladite source de signal (10) comprenant un filtre de modulation (20) pour limiter la largeur de bande du signal de communication ; et
   une unité de réduction de crête (110) couplée pour recevoir ledit signal de communication à largeur de bande limitée et produire un signal de sortie à crête réduite et à largeur de bande limitée, l'unité de réduction de crête (110) comprenant un circuit destiné à produire une forme d'onde de correction de réduction de crête correspondant à la différence entre le signal de communication et le signal de communication à largeur de bande limitée à une valeur limite déterminée au niveau de chaque échantillon, un filtre de correction (170) destiné à filtrer la forme d'onde de correction de réduction de crête et à produire un signal de correction de réduction de crête correspondant aux limites de largeur de bande du signal de communication, ledit filtre de correction (170) étant réglé pour correspondre aux caractéristiques de filtrage du dudit filtre de modulation (20), et un combineur (80) destiné à combiner ledit signal de communication à largeur de bande limitée et ledit signal de correction de réduction de crête à largeur de bande limitée pour produire un signal de sortie à crête réduite et à largeur de bande limitée ;
   dans lequel ladite unité de réduction de crête (110) comprend en outre :

   un premier trajet de signal recevant en tant que signal d'entrée ledit signal de communication à largeur de bande limitée et incluant un circuit de retard (120) destiné à retarder le signal d'entrée ;
   un second trajet de signal parallèle recevant ledit signal d'entrée à largeur de bande limitée et incluant une unité de calcul de réduction de crête (140) destinée à calculer une correction de réduction de crête et ledit filtre de correction (170) produisant une opération de filtrage sur la correction de réduction de crête ;
   dans lequel le combineur (80) est conçu pour combiner la correction de réduction de crête filtrée et le signal d'entrée retardé et pour produire des signaux de sortie réglés, dans lequel ledit second trajet de signal comprend en outre un circuit de gain (160) destiné à régler l'amplitude de la correction au moyen d'une valeur de gain (g) qui dépend du signal de communication à largeur de bande limitée, de la valeur limite et de la conception du filtre de conception.

2. Système de communication selon la revendication 1, ledit système de communication étant un système de communication à porteuses multiples.

**3.** Système de communication selon la revendication 1, ledit système de communication étant un système de communication à étalement du spectre.

**4.** Système de communication selon la revendication 1, dans lequel ladite unité de réduction de crête (110) comprend en outre un retard (120) pour retarder le signal de communication à largeur de bande limitée et fournir le signal retardé audit combineur (80).

**5.** Système de communication selon la revendication 1, dans lequel ledit combineur (80) est un circuit d'ajout complexe.

**6.** Système de communication selon la revendication 1, comprenant en outre une étape de conversion numérique-analogique (30) destinée à convertir ledit signal de sortie à crête réduite en un signal analogique.

**7.** Système de communication selon la revendication 6, comprenant en outre un amplificateur de puissance (50) recevant et amplifiant ledit signal analogique.

**8.** Système de communication selon la revendication 7, comprenant en outre une antenne (60) couplée à la sortie de l'amplificateur de puissance (50).

**9.** Système de communication selon la revendication 1, dans lequel ledit second trajet de signal comprend en outre un détecteur d'amplitude de signal (180), un comparateur (190) destiné à comparer l'amplitude du signal à une valeur limite prédéterminée et un commutateur (150) couplé à la sortie du comparateur (190) et à l'unité de calcul de réduction de crête (140) pour sélectionner ladite correction de réduction de crête si l'amplitude du signal dépasse la valeur limite prédéterminée.

**10.** Système de communication selon la revendication 1, dans lequel ladite valeur de gain (g) est inférieure à 1 lorsque la réponse impulsionnelle de crête du filtre de correction (170) est normalisée à 1.

**11.** Système de communication selon la revendication 1, dans lequel ladite valeur de gain (g) est supérieure à zéro mais inférieure à un niveau qui entraînerait un début d'augmentation du rapport crête-moyenne.

**12.** Système de communication selon la revendication 1, dans lequel ledit circuit de gain (160) comprend un multiplicateur recevant ledit signal de correction de réduction de crête et le multipliant par ladite valeur de gain (g).

**13.** Système de communication selon la revendication 1, dans lequel le signal d'entrée comprend des échantillons numériques représentés par des vecteurs complexes et dans lequel l'unité de calcul de réduction de crête (140) comprend un processeur algorithmique qui exécute un calcul de vecteur complexe sur les échantillons d'entrée pour déterminer un vecteur de correction complexe qui, lorsqu'il est ajouté à l'échantillon d'entrée, a pour résultat une amplitude de signal à ou dans une valeur limite prédéterminée.

**14.** Système de communication selon la revendication 13, dans lequel le combineur (80) comprend un circuit d'ajout.

**15.** Procédé de réduction de crête de signal dans un système de communication dans lequel le signal de communication est traité pour limiter la largeur de bande de signal à une bande spectrale prédéterminée, comprenant :

la réception en entrée d'un signal de communication à largeur de bande limitée ;
la détermination d'un signal de correction de réduction de crête sur la base de la quantité de dépassement par le signal de communication à largeur de bande limitée d'une valeur seuil de puissance de crête, déterminée pour chaque échantillon ;
le filtrage du signal de correction de crête pour limiter la largeur de bande du signal de correction de crête ;
le réglage du signal de correction de crête au moyen d'une valeur de gain (g) ; et
la combinaison du signal de correction de crête filtré et du signal de communication d'entrée filtré pour produire un signal de communication de sortie à crête réduite ;
dans lequel le système de communication comprend une unité de réduction de crête comprenant un premier trajet de signal et un second trajet de signal parallèle et le procédé comprenant en outre :

la réception dudit signal d'entrée à largeur de bande limitée par le premier trajet de signal ;
le retardement du signal d'entrée ;
la réception dudit signal d'entrée à largeur de bande limitée par le second trajet de signal parallèle ;

le calcul d'une correction de réduction de crête par l'unité de réduction de crête ;

la production d'une opération de filtrage sur la correction de réduction de crête ;

le réglage de l'amplitude de la correction au moyen d'une valeur de gain (g) qui dépend du signal de communication à largeur de bande limitée, de la valeur limite et de la conception du filtre de correction ; et

la combinaison de la correction de réduction de crête filtrée et du signal d'entrée retardé et la production de signaux de sortie à crête réglée.

16. Procédé de réduction de crête de signal dans un système de communication selon la revendication 15, comprenant en outre la répétition desdites étapes de détermination, réglage de gain, filtrage et combinaison en employant une valeur de gain (g) différente.

17. Procédé de réduction de crête de signal dans un système de communication selon la revendication 15, dans lequel ladite détermination comprend l'exécution d'un algorithme de réduction de crête sur ledit signal de communication d'entrée.

18. Procédé de réduction de crête de signal dans un système de communication selon la revendication 17, comprenant en outre la détection de l'amplitude du signal de communication d'entrée et la comparaison de l'amplitude avec une valeur limite de crête.

19. Procédé de réduction de crête de signal dans un système de communication selon la revendication 18, comprenant en outre l'émission en sortie sélective du signal de correction de réduction de crête à filtrer et combiner uniquement lorsque l'amplitude du signal de communication d'entrée dépasse l'amplitude de la valeur limite de crête.

20. Procédé de réduction de crête de signal dans un système de communication selon la revendication 15, dans lequel ledit signal de communication est un signal à porteuses multiples produit par la combinaison d'une pluralité de sources de signal à porteuses séparées (10) ayant chacune un flux de symboles de porteuses correspondant à un ou plusieurs canaux de données.

21. Procédé de réduction de crête de signal dans un système de communication selon la revendication 15, dans lequel ledit signal de communication est un signal à étalement du spectre produit par la combinaison d'une pluralité de flux séparés de symboles de communication correspondant à une pluralité de canaux de données.

22. Procédé de réduction de crête de signal dans un système de communication selon la revendication 15, dans lequel ladite valeur de gain (g) est supérieure à zéro mais inférieure à un niveau qui entraînerait un début d'augmentation du rapport crête-moyenne.

## FIG. 1

*PRIOR ART*

*FIG. 2*

*PRIOR ART*

# FIG. 3

PRIOR ART

TRANSMISSION DATA

$D_1$

$D_2$

$D_n$

| CODE-MULTIPLEXED SIGNAL GENERATOR | 1 |

$V_1$

$V_2$

| SIGNAL - PEAK SUPPRESSION UNIT | 9 |

| FILTER | 2 |

| D/A CONVERTER | 3 |

| MODULATOR | 4 |

| POWER AMPLIFIER | 5 |

6

EP 1 405 427 B1

# FIG. 4

FIG. 5

FIG. 6

EP 1 405 427 B1

FIG. 7

$$C = \left[ L \frac{S}{|S|} - S \right]$$

KEY

S = original signal
C = correction signal
L = limit level (desired peak signal level)

EP 1 405 427 B1

## FIG. 8

Correction Filter Impulse
Response Function

FIG. 9

## FIG. 10

EP 1 405 427 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1091516 A